# EUROPEAN PATENT SPECIFICATION

(11) **EP 2 412 572 B1**
(45) Date of publication and mention of the grant of the patent: **02.11.2016**
(21) Application number: 10171234.7
(22) Date of filing: 29.07.2010
(51) Int. Cl.: B60N 3/04

(54) **Mat for covering a useable surface in the driver's cab of an agricultural vehicle**
Matte zum Abdecken einer nutzbaren Oberfläche in der Fahrerkabine eines landwirtschaftlichen Fahrzeugs
Tapis pour recouvrir une surface utilisable dans la cabine d'un conducteur d'un véhicule agricole

(43) Date of publication of application: 01.02.2012
(73) Proprietor: CLAAS Tractor SAS, 78141 Velizy-Villacoublay (FR)
(72) Inventor: Jardet, Gilles, 91380 Chilly Mazarin (FR)
(74) Representative: Budach, Steffen

(56) References cited:
- EP-A1- 0 033 934
- DE-C1- 3 519 123
- JP-A- 2002 002 351
- US-A- 2 909 234
- US-A- 5 007 670
- US-A- 5 765 900

## Description

Driver's cabs of agricultural vehicles (for example tractors, forage harvesters, combine harvesters) have a cab floor. A seat present in the cab, particularly a driver's seat, co-driver's seat and/or other functional objects is/are mostly fastened to this cab floor.

To install a driver's or co-driver's seat, for example four holes are drilled into the cab floor which are arranged such that a foot of the seat suitably orientated relative to the cab floor can be screwed on by means of screws.

For the insulation of engine and driving noises and for thermal insulation, driver's cabs are additionally equipped with a floor mat which covers the cab floor entirely or partially. In order to mount a seat on the cab floor at least one hole is provided in the area of conventional floor mats which exposes a region for fastening the seat to the cab floor. If the seat requires fastening in a plurality of points on the cab floor (for example by means of a plurality of screws), a plurality of holes corresponding to the fastening positions is provided in the floor mat.

A rising demand for different equipment versions with driver's cabs requires that different types and/or sizes of seats can be installed in driver's cabs. Since these often have different fastening dimensions, differently arranged drilled holes have to be provided in the cab floor in order to ensure the installability of the various seat types. Accordingly, different floor mats have to be kept ready at present when installing the driver's cabs which are provided with suitably arranged holes for the installation of the respective seat. The seat-depended provision of floor mats constitutes increased expenditure in the manufacture of cabs.

From US 5007670 (A) a liner assembly for the bed portion of a pickup truck, a van and the like, is known, which comprises a liner pad portion placeable over a bed portion, wherein said liner pad portion comprises at least one removable segment defined by a plurality of perforations, wherein the at least one removable segment comprises a plurality of removable segments for accommodating the legs of seats through said pad portion.

In addition there is the disadvantage that a seat once installed can not be easily replaced by a seat with other fastening dimensions because of the established holes in the floor mat. The same disadvantage exists when an installed seat is to be installed in another position.

It is therefore an object of the present invention to provide a mat that can be flexibly used for different fastening requirements particularly because of different functional objects or their different desired installation positions.

The object of the invention is a mat according to claim 1. Optional subject matter of the invention is defined according to the dependent claims. A mat of the kind described above, comprises at least one surface section limited by a material-weakened margin, wherein the surface section can be removed in order to expose a passage through the mat for fastening a functional object to the useable surface.

According to the invention, at least one surface section is provided in the mat that is surrounded by a material-weakened margin. This material-weakened margin serves as predetermined breaking point. Immediately prior to the installation the surface section can be removed from the mat for example by simply exerting pressure on the surface section. When doing so, the material-weakened margin preferably starts to break because of the increased stress. A breaking line along the material weakening results, so that the surface section can be removed, thus exposing a passage through the mat. In the installed state of the mat lying on the useable surface, the passage created exposes a region of the useable surface which serves for fastening the functional object.

Through the measure according to the invention a possibility of individualizing the mat at a later date - namely only immediately prior to the installation - for the respective utilization purpose is created in a simple manner. This offers the advantage that a mat can fulfil different fastening requirements. Accordingly, storage of different mats is obsolete, and more flexible use is made possible.

Practically, the removable surface section is positioned on the mat in such a manner that the passage exposed upon its removal locationally corresponds to a fastening location of the functional object on the useable surface. The exposed passage thus coincides with the fastening location.

Advantageously, the mat has a plurality of such removable surface sections which can serve different purposes.

For example, a plurality of removable surface sections can be positioned on the mat in order to be able to expose a plurality of passages, which makes possible fastening of the functional object in a plurality of locations on the useable surface. This can be necessary for the fastening of a functional object subject to mechanical load such as for example a seat, which for secure fastening is screwed to the cab floor with a plurality of screws.

Further, a plurality of removable surface sections can be provided in order to make possible fastening of a functional object in different installation positions. Dependent on the desired installation position, only the surface sections exposing the respective installation position are removed, while remaining surface sections remain in the mat. Advantageously, a number of removable surface sections can be assigned to a group for this purpose which corresponds to an installation position of a functional object.

As installation aid, one or a plurality of surface sections can be advantageously provided with a marking, which reflects their association with a group. In this case an assemblyman can easily detect which surface sections have to be removed for a desired installation position.

Furthermore, a plurality of removable surface sections can be provided in order to make possible fastening of different functional objects. This idea can be advantageously implemented in that at least a first group of removable surface sections is associated with the installation of a first functional object and at least a second group of removable surface sections is associated with the installation of a second functional object having fastening dimensions deviating from the first functional object. By such association of removable surface sections with functional objects, pre-customizing of the mat is established in a simple manner. Accordingly, the mat can be used for the installation of various functional objects, wherein their individualization only takes place immediately prior to the installation. It is conceivable to take into account a plurality of functional objects (with different fastening dimensions) which can be effected by associating surface sections with a corresponding number of groups.

While the surface sections of different groups can be arranged differently, it is additionally conceivable that surface sections of a first group at least partially coincide with those of a second group.

According to an advantageous configuration of the mat said mat is produced of plastic, more preferably of polyurethane or a plastic composite material.

The material-weakened margin of the removable surface section is formed as notching in the flat material of the mat. Through this measure, a predetermined breaking point is created in a simple manner which extends along the notching. For the simple, complete removal without tools, it is also possible to design the margin in a circumferential manner (e.g. circular or oval-shaped), such that a notch running about the surface section to be removed is created as predetermined breaking point.

In an advantageous manner, the functional object is a seat which serves for the seating of a driver or co-driver in the driver's cab. Other functional objects that are fastened to the cab floor (e.g. operating instruments) are likewise conceivable.

The invention is explained in more detailed in the following making reference to the enclosed figures by means of different exemplary embodiments. This also results in further details and advantages of the invention. It shows:
- Fig. 1: a detail from a driver's cab of an agricultural vehicle showing a mat in the installed state in lateral section, wherein the surface sections provided according to the invention are removed,
- Fig. 2: a region of a mat in top view,
- Fig. 3: the region of the mat from fig. 2 in sectional view,
- Fig. 4: an alternative version of a region of a mat according to the invention in top view,
- Fig. 5: the region of the mat from fig. 4 in sectional view,
- Fig. 6: a mat according to the invention with two groups of removable surface sections in top view,
- Fig. 7: a mat according to the invention with two groups of removable surface sections which partially coincide, in top view,
- Fig. 8: a close arrangement of removable surface sections on a mat region in top view.

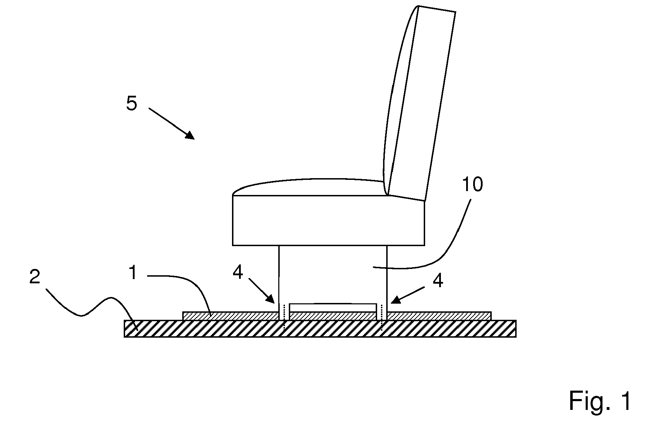

Fig. 1 shows a detail of a driver's cab of an agricultural vehicle, for example a tractor, a self-propelled field harvester or combine harvester. Shown in lateral view is a section of the cab floor 2 on which a seat 5 is mounted. This can be a driver's or co-driver's seat. Alternatively or additionally another functional object (not shown) can be mounted on the cab floor 2.

The seat 5 comprises a foot 10 which in a front and a rear region is in contact with the cab floor 2 or rests on said cab floor. For secure fastening the foot 10 of the seat 5 is screwed to the cab floor 2 with fastening means, preferably screws, indicated by interrupted lines.

A mat 1 covers the cab floor 2. The mat 1 among other things serves for insulating sound vibrations and for thermal insulation. To achieve a high degree of insulation, the mat 1 only exposes the surface sections of the cab floor 2 below the seat 5 which are required for mounting the seat 5. To expose these mounting regions, two passages 4 are provided in the mat 1 through which the front or rear region of the foot 10 can come in contact with the cab floor 2. Accordingly, the shown mat 1 is a mat wherein for exposing the passages 4 the surface sections provided according to the invention have already been removed.

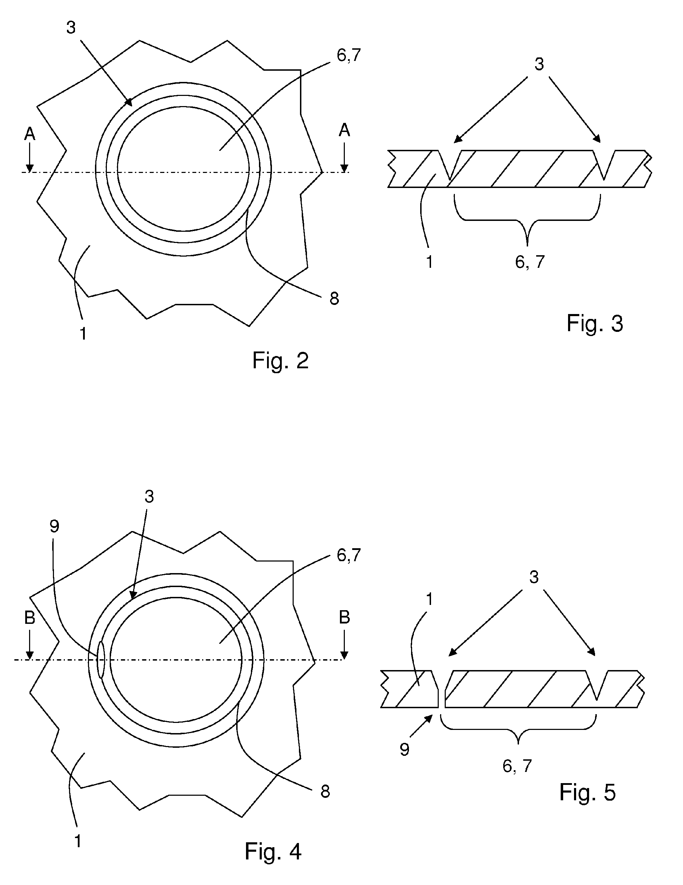

Fig. 2 shows an alternative region of a mat 1, which is not part of the invention, in top view. It shows a surface section of a mat 1, as can be installed in a cab for covering the floor 2 for example according to Fig. 1. According to Fig. 2, the mat 1 has a circular section 6, 7 which is delimited by a margin 3.

As illustrated in Fig. 3, which is a sectional view for representation according to Fig. 2, the margin 3 surrounding the surface section 6, 7 has a material weakening, i.e. a lesser material thickness than the mat 1 in its remaining regions. The material weakening is formed as circumferential notch, which has been generated in the material of the mat for example through stamping. In Fig. 2 a predetermined breaking edge 8 generated through the material weakening is designated. Accordingly, the surface section 6, 7 according to the invention can be removed from the material of the mat 1 by simply applying pressure on the surface section 6, 7. With suitable design or dimensioning of the margin 3 this can be performed manually without the help of tools (thumb pressure). Polyurethane is a suitable material for the mat 1.

Fig. 4 and 5 shows a mat with the margin 3 according to the invention. Deviating from the mat according to Fig. 2 and 3 in addition one single hole 9 is provided in the predetermined breaking edge 8, which passes through the material of the mat 1, as shown in Fig. 5. The hole 9, which is oval-shaped in this case, but can also be designed differently, for example slit-like or similar, again facilitates the removal of the surface section 6, 7 in that it predetermines the start of a desired breakage.

In general, numerous practical arrangements of the removable surface sections are conceivable.

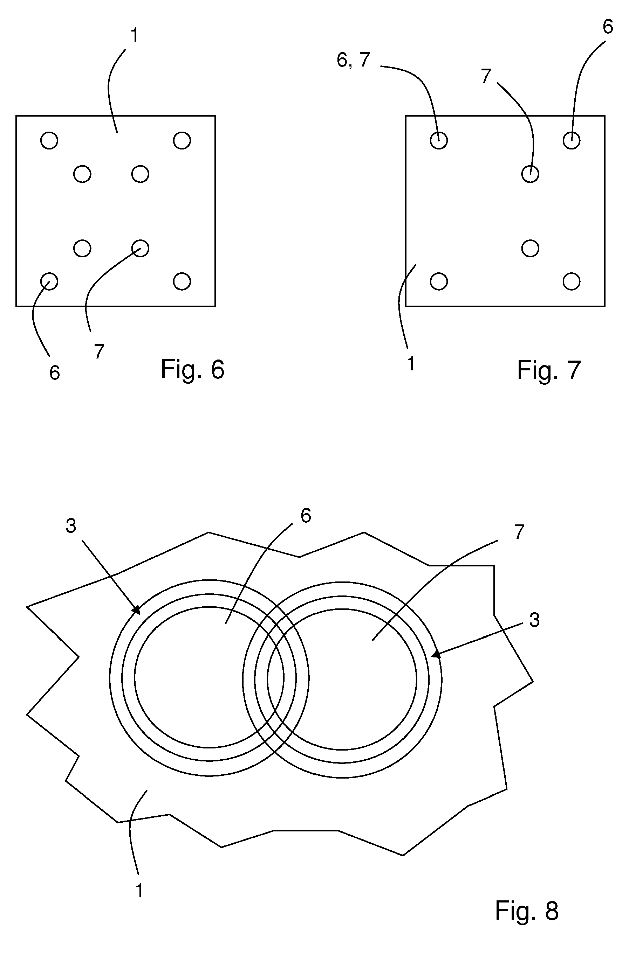

Fig. 6 shows a mat 1 according to the invention with two groups of removable surface sections 6, 7 in top view. On the mat 1, four removable surface sections 6 are provided, which are arranged near the outer region of the mat 1 and form a first group. In addition, four removable surface sections 7 are provided on the mat 1 which are arranged near the middle of the mat 1 and form a second group. According to an advantageous configuration of the invention the surface sections 6 of the first group are associated with the installation of a first functional object, for example a seat of a first type. The surface sections 7 of the second group in contrast are associated with the installation of a second functional object, for example the seat of a second type. As is evident from the different arrangement of the surface sections 6, 7 the seat of a second type has fastening dimensions that differ from the seat of the first type, in this case narrower ones. Any other arrangements are conceivable depending on requirement.

Since the mat 1 is initially (that is: prior to the removal of surface sections 6, 7) pre-customized for the installation of both seat types, it can be flexibly used for the installation of different seat types. This principle obviously is applicable also to other functional objects to be fastened to a useable surface.

In an advantageous manner the individual surface sections 6, 7 are visually marked for example such that their association with the functional object to be fastened can be quickly and clearly perceived.

Fig. 7 shows an alternative arrangement to Fig. 6, wherein removable surface sections 6 of a first group partially coincide with removable surface sections 7 of a second group.

Fig. 8 shows a close arrangement of removable surface sections 6, 7 on a region of a mat in top view. The margins 3 and surfaces sections 6, 7 partially overlap. With this arrangement, the effects according to the invention can be achieved too.

It is pointed out that the mat can have any basic dimensions which are practical for use in the cab.

### List of reference numbers

- 1: Mat
- 2: Cab floor
- 3: Margin
- 4: Passage
- 5: Seat
- 6: Surface section
- 7: Surface section
- 8: Predetermined breaking edge
- 9: Hole
- 10: Foot

## Claims

1. Mat (1) for covering a useable surface (2) in the driver's cab of an agricultural vehicle, wherein the mat (1) comprises at least one surface section (6, 7) delimited by a material-weakened margin (3), wherein the surface section (6, 7) can be removed in order to expose a passage (4) through the mat (1) for fastening a functional object (5) on the useable surface (2), **characterised in that** the material-weakened margin (3) is formed as notching in the flat material of the mat (1), and that additionally to the notch one single hole (9) is provided in the breaking edge (8), which passes through the material of the mat (1), wherein the hole (9) facilitates the removal of the surface section (6, 7) **in that** it predetermines the start of a desired breakage.

2. Mat according to claim 1, **characterized in that** the removable surface section (6, 7) is positioned on the mat (1) in such a manner that the passage (4) exposed upon removal of surface section (6, 7) corresponds to a fastening location of the functional object (5) on the useable surface (2).

3. Mat according to claim 1 or 2, **characterized by** a plurality of removable surface sections (6, 7).

4. Mat according to claim 3, **characterized in that** a number of removable surface sections (6, 7) is associated with a group which corresponds to an installation position of a functional object (5).

5. Mat according to claim 4, **characterized in that** a plurality of installation positions is provided for the functional object (5).

6. Mat according to claim 4 or 5, **characterized in that** one or a plurality of surface sections (6, 7) is provided with a marking that reflects their association with a group.

7. Mat according to any one of the claims 3 to 6, **characterized in that** at least a first group of removable surface sections (6) is associated with the installation of a first functional object (5) and at least one second group of removable surface sections (7) is associated with the installation of a second functional object having fastening dimensions deviating from the first functional object (5)

8. Mat according to claim 7, **characterized in that** the surface sections (6) of the first group at least partially coincide with the surface sections (7) of the second group.

9. Mat according to any one of the claims 1 to 8, **characterized in that** the mat (1) is produced of polyurethane.

10. Mat according to any one of the claims 1 to 9, **characterized in that** the functional object (5) is a seat.

## Patentansprüche

1. Matte (1) zum Bedecken einer benutzbaren Oberfläche (2) in der Fahrerkabine eines landwirtschaftlichen Fahrzeugs, wobei die Matte (1) wenigstens einen Oberflächenbereich (6, 7) umfasst, der auf einen materialgeschwächten Rand (3) begrenzt ist, wobei der Oberflächenbereich (6, 7) entfernt werden kann, um einen Durchgang (4) durch die Matte (1) freizugeben, damit ein funktionales Objekt (5) auf der benutzbaren Oberfläche (2) befestigt werden kann, **dadurch gekennzeichnet, dass** der materialgeschwächte Rand (3) als Kerbung im flachen Material der Matte (1) gebildet wird, und dass zusätzlich zur Kerbe ein einzelnes Loch (9) in der Bruchkante (8) zur Verfügung gestellt ist, das durch das Material der Matte (1) passiert, wobei das Loch (9) das Entfernen des Oberflächenbereichs (6, 7) dahingehend vereinfacht, dass es den Beginn eines gewünschten Bruchs vorbestimmt.

2. Matte nach Anspruch 1, **dadurch gekennzeichnet, dass** der entfernbare Oberflächenbereich (6, 7) auf der Matte (1) derart positioniert ist, dass der Durchgang (4), der auf das Entfernen des Oberflächenbereichs (6, 7) hin freigelegt wird, einem Befestigungsort des funktionalen Objekts (5) auf der benutzbaren Oberfläche (2) entspricht.

3. Matte nach Anspruch 1 oder 2, **gekennzeichnet durch** mehrere entfernbare Oberflächenbereiche (6, 7).

4. Matte nach Anspruch 3, **dadurch gekennzeichnet, dass** eine Anzahl der entfernbaren Oberflächenbereiche (6, 7) mit einer Gruppe zusammenhängt, die mit einer Installationsposition eines funktionalen Objekts (5) zusammenhängt.

5. Matte nach Anspruch 4, **dadurch gekennzeichnet, dass** mehrere Installationspositionen für das funktionale Objekt (5) zur Verfügung gestellt sind.

6. Matte nach Anspruch 4 oder 5, **dadurch gekennzeichnet, dass** einer oder mehrere Oberflächenbereiche (6, 7) mit einer Markierung zur Verfügung gestellt sind, die ihren Zusammenhang mit einer Gruppe widerspiegelt.

7. Matte nach einem der Ansprüche 3 bis 6, **dadurch gekennzeichnet, dass** wenigstens eine erste Gruppe entfernbarer Oberflächenbereiche (6) mit der Installation eines ersten funktionalen Objektes (5) zusammenhängt und wenigstens eine zweite Gruppe entfernbarer Oberflächenbereiche (7) mit der Installation eines zweiten funktionalen Objektes, das Befestigungsabmessungen aufweist, die von denjenigen des ersten funktionalen Objektes (5) abweichen, zusammenhängt.

8. Matte nach Anspruch 7, **dadurch gekennzeichnet, dass** die Oberflächenbereiche (6) der ersten Gruppe wenigstens teilweise mit den Oberflächenbereichen (7) der zweiten Gruppe übereinstimmen.

9. Matte nach einem der Ansprüche 1 bis 8, **dadurch gekennzeichnet, dass** die Matte (1) aus Polyurethan hergestellt ist.

10. Matte nach einem der Ansprüche 1 bis 9, **dadurch gekennzeichnet, dass** das funktionale Objekt (5) ein Sitz ist.

## Revendications

1. Tapis (1) pour recouvrir une surface utilisable (2) dans la cabine de conducteur d'un véhicule agricole, où le tapis (1) comprend au moins une section de surface (6, 7) délimitée par une bordure (3) à matériau affaibli, où la section de surface (6, 7) peut être retirée afin de dégager un passage (4) à travers le tapis (1) en vue de la fixation d'un objet fonctionnel (5) sur la surface utilisable (2), **caractérisé en ce que** la bordure (3) à matériau affaibli est formée par des encoches dans le matériau plat du tapis (1), et **en ce que**, en plus de l'encoche, un trou (9) unique est prévu dans le bord de rupture (8), qui traverse le matériau du tapis (1), où le trou (9) facilite le retrait de la section de surface (6, 7) en ce sens qu'il prédétermine le début d'une rupture désirée.

2. Tapis selon la revendication 1, **caractérisé en ce que** la section de surface (6, 7) amovible est positionnée sur le tapis (1) de manière telle que le passage (4) dégagé suite au retrait de la section de surface (6, 7) corresponde à un emplacement de fixation de l'objet fonctionnel (5) sur la surface utilisable (2).

3. Tapis selon la revendication 1 ou 2, **caractérisé en ce qu'**il comporte une pluralité de sections de surface (6, 7) amovibles.

4. Tapis selon la revendication 3, **caractérisé en ce qu'**un certain nombre de sections de surface (6, 7) amovibles sont associées à un groupe qui correspond à une position d'installation d'un objet fonctionnel (5).

5. Tapis selon la revendication 4, **caractérisé en ce qu'**une pluralité de positions d'installation sont prévues pour l'objet fonctionnel (5).

6. Tapis selon la revendication 4 ou 5, **caractérisé en ce qu'**une ou plusieurs sections de surface (6, 7) est/sont pourvue(s) d'un marquage qui indique leur association à un groupe.

7. Tapis selon l'une quelconque des revendications 3 à 6, **caractérisé en ce qu'**au moins un premier groupe de sections de surface (6) amovibles est associé à l'installation d'un premier objet fonction-nel (5), et au moins un deuxième groupe de sections de surface (7) amovibles est associé à l'installation d'un deuxième objet fonctionnel présentant des dimensions de fixation différentes du premier objet fonctionnel (5).

8. Tapis selon la revendication 7, **caractérisé en ce que** les sections de surface (6) du premier groupe coïncident au moins partiellement avec les sections de surface (7) du deuxième groupe.

9. Tapis selon l'une quelconque des revendications 1 à 8, **caractérisé en ce que** le tapis (1) est réalisé en polyuréthane.

10. Tapis selon l'une quelconque des revendications 1 à 9, **caractérisé en ce que** l'objet fonctionnel (5) est un siège.
